# EUROPÄISCHE PATENTSCHRIFT

(11) **EP 3 931 655 B1**
(45) Veröffentlichungstag und Bekanntmachung des Hinweises auf die Patenterteilung: **22.02.2023**
(21) Anmeldenummer: 20707424.6
(22) Anmeldetag: 27.02.2020
(51) Int. Cl.: G05D 1/02, G01C 21/20, G01C 21/34, G01C 21/00

(54) **ABFAHREN EINER VORGEGEBENEN ANORDNUNG VON WEGEN MIT EINEM MOBILEN ROBOTER**
TRAVELLING DOWN A PRESCRIBED ARRANGEMENT OF PATHS WITH A MOBILE ROBOT
PARCOURS D'UN AGENCEMENT PRÉDÉFINI DE CHEMINS AVEC UN ROBOT MOBILE

(30) Priorität: 28.02.2019 DE 102019202702
(43) Veröffentlichungstag der Anmeldung: 05.01.2022
(73) Patentinhaber: KUKA Deutschland GmbH, 86165 Augsburg (DE)
(72) Erfinder: BALDINI, Marco, 86161 Augsburg (DE); KUEMMERLE, Rainer, 81539 München (DE); SORAGNA, Alberto, 42041 Brescello (IT)
(74) Vertreter: Tillmann, Axel
(86) Internationale Anmeldenummer: PCT/EP2020/055152
(87) Internationale Veröffentlichungsnummer: WO 2020/174049

(56) Entgegenhaltungen:
- WO-A1-2018/034820
- WO-A1-2018/095605
- US-A1- 2018 284 768

## Beschreibung

Die vorliegende Erfindung betrifft ein Verfahren zum Abfahren einer vorgegebenen Anordnung von Wegen, die in Knoten miteinander verbunden sind, mit einem mobilen, insbesondere autonomen, Roboter, sowie ein System und ein Computerprogrammprodukt zur Durchführung des Verfahrens.

Aus der WO 2018/095605 A1 ist ein Verfahren zum Behandeln von Bodenflächen bekannt, welches einen Planungsmodus umfasst, welche auf einer zu behandelnden Bodenfläche mindestens zwei Zonen, in jeder Zone einen ersten Knoten und von mindestens einer Zone einen Verbindungsweg zu einem ersten Knoten einer anderen Zone festlegbar macht.

Aus der WO 2018/034820 A1 ist eine Berechnung von Abkürzungen für Zellen in einer zell-basierten Routenplanung in einem mobilen Navigationssystem bekannt, wobei Abkürzungen neu berechnet werden, basierend auf aktualisierten Verkehrsnahrichten und geschätzten Ankunftszeiten bei Eintritt in die Zelle.

Aus der US 2018/284768 A1 ist ein System und Verfahren bekannt, welches die Bewegung eines autonomen Fahrzeugs steuert, indem der Fortschritt hin zu einem Ziel eher belohnt oder unterstützt wird, als lediglich die die zurückgelegte Strecke zu belohnen.

Bei der simultanen Posenbestimmung und Kartenerstellung ("Simultaneous Localization and Mapping", SLAM) erstellt ein mobiler Roboter gleichzeitig eine Karte seiner Umgebung und ermittelt seine Pose innerhalb dieser Karte.

Insbesondere hierzu kann einem, insbesondere autonomen, mobilen Roboter eine Anordnung von Wegen, die in Knoten miteinander verbunden sind, vorgegeben werden. Der Roboter kann dann diese Wege (autonom) abfahren und dabei eine simultane Posenbestimmung und Kartenerstellung durchführen. Auf diese Weise kann vorteilhaft a priori-Wissen über die Umgebung genutzt und so die Erkundung der Umgebung durch den Roboter verbessert werden.

Somit stellen autonome Roboter und/oder eine simultanen Posenbestimmung und Kartenerstellung besonders vorteilhafte Anwendungen der vorliegenden Erfindung dar, ohne dass diese hierauf beschränkt ist, sondern generell das Abfahren einer vorgegebenen Anordnung von Wegen, die in Knoten miteinander verbunden sind, mit einem mobilen Roboter verbessern kann.

Eine Aufgabe der vorliegenden Erfindung ist es entsprechend, das Abfahren einer vorgegebenen Anordnung von Wegen, die in Knoten miteinander verbunden sind, mit einem mobilen, insbesondere autonomen, Roboter zu verbessern.

Diese Aufgabe wird durch ein Verfahren mit den Merkmalen des Anspruchs 1 gelöst. Ansprüche 7, 8 stellen ein System bzw. Computerprogrammprodukt zur Durchführung eines hier beschriebenen Verfahrens unter Schutz. Die Unteransprüche betreffen vorteilhafte Weiterbildungen.

Nach einer Ausführung der vorliegenden Erfindung wechselt ein mobiler, in einer Ausführung autonomer, Roboter beim Abfahren einer vorgegebenen Anordnung von Wegen, die in Knoten miteinander verbunden sind, insbesondere automatisiert und/oder für wenigstens einen, insbesondere an wenigstens einem, angefahrenen (der) Knoten, von einer Ausgangs-Route, die alle (bisher) noch nicht abgefahrenen Wege enthält, zu einer hiervon verschiedenen Ersatz-Route, falls (ermittelt wird, dass) ein Wert einer Gütefunktion für die Ersatz-Route kleiner als ein Wert dieser Gütefunktion für die Ausgangs-Route ist.

In einer Weiterbildung wechselt der Roboter, insbesondere automatisiert und/oder für wenigstens einen, insbesondere an wenigstens einem, (der) angefahrenen Knoten, von der Ausgangs-Route zu derjenigen von mehreren Ersatz-Routen, für die der Wert dieser Gütefunktion am kleinsten ist.

Entsprechend werden in einer Ausführung (für den jeweiligen Knoten) jeweils die Werte der Gütefunktion für die (bisher geplante) Ausgangs-Route und die Ersatz-Route(n) ermittelt und dann die Route mit dem kleineren bzw. kleinsten Wert des Gütekriteriums als neue (Ausgangs-)Route verwendet bzw. deren nächste(r) Knoten mit dem Roboter angefahren.

In einer Ausführung verbinden die Ausgangs-Route, die Ersatz-Route(n) und/oder die Ziel-Route(n) jeweils den angefahrenen (der) Knoten mit einem bzw. demselben vorgegebenen Zielknoten.

Die Ersatz-Route(n) weist bzw. weisen in einer Ausführung (jeweils) eine, in einer Ausführung nächstliegende, Schleifen-Route, welche bzw. auf der der Roboter wenigstens einen Weg nach Durchfahren dieses Weges und wenigstens eines weiteren Weges erneut durchfährt, und eine daran anschließende Rest-Route auf, die alle dann noch nicht abgefahrenen Wege enthält, in einer Ausführung besteht die (jeweilige) Ersatz-Route hieraus.

Die Gütefunktion hängt in einer Ausführung von einem ersten Aufwand, einem zweiten Aufwand und einer variablen Gewichtung des ersten und zweiten Wertes zueinander ab. In einer Weiterbildung kann die Gütefunktion eine gewichtet Summe C_{E} = C₁ + K·C₂ mit der Gütefunktion C_{E}, dem ersten Aufwand C₁, dem zweiten Aufwand C₂ und einer Gewichtung K sein, die vorzugsweise auf einen Bereich [0; 1] normiert sein kann, so dass in einer Ausführung der zweiten Aufwand maximal gleich dem ersten Aufwand gewichtet und minimal mit Null gewichtet bzw. ausgeblendet wird.

Der erste Aufwand ist in einer Ausführung der kleinere von a) einem minimalen Aufwand für eine, insbesondere nächstliegende, Schleifen-Route, welche wenigstens einen Weg nach Durchfahren dieses Weges und wenigstens eines weiteren Weges erneut durchfährt, und b) einem minimalen Aufwand für eine Ziel-Route, die alle noch nicht abgefahrenen Wege und in einer Ausführung keine Schleifen-Route enthält: erster Aufwand = Minimum(minimaler Aufwand für Schleifen-Route; minimaler Aufwand für Ziel-Route).

In einer Ausführung ist der erste Aufwand somit der minimale Aufwand für eine bzw. die nächstliegende Schleifen-Route, sofern eine bzw. mehrere solche vorhanden ist/sind, und andernfalls der minimale Aufwand für die Ziel-Route. Bei (einer) der Ersatz-Route(n) ist der erste Aufwand somit in einer Ausführung der Aufwand für deren (nächstliegende) Schleifen-Route. Bei der Ausgangs-Route ist der erste Aufwand in einer Ausführung ebenfalls der Aufwand für deren (nächstliegende) Schleifen-Route, sofern sie eine solche aufweist, und andernfalls der minimale Aufwand für die Ausgangs-Route.

Der zweite Aufwand ist in einer Ausführung ein minimaler Aufwand für eine Rest-Route, die alle nach der (für den ersten Aufwand verwendeten bzw. maßgeblichen) Schleifen-Route noch nicht abgefahrenen Wege enthält, für die Ersatz-Route(n) somit in einer Ausführung der minimaler Aufwand für deren Rest-Route(n), für die Ausgangs-Route in einer Ausführung der Aufwand für deren Rest nach ihrer (nächstliegenden) Schleifen-Route, sofern die Ausgangs-Route eine solche aufweist, und andernfalls gleich Null.

Die variable Gewichtung gewichtet in einer Ausführung den zweiten Aufwand für eine erste Lokalisierungsunsicherheit des Roboters niedriger als für eine kleinere zweite Lokalisierungsunsicherheit des Roboters bzw. wird entsprechend ermittelt. In einer Weiterbildung gewichtet die variable Gewichtung den zweiten Aufwand für eine minimale Lokalisierungsunsicherheit des Roboters maximal, insbesondere gleich dem ersten Aufwand, und/oder für eine maximale Lokalisierungsunsicherheit des Roboters minimal, in einer Ausführung mit Null. Entsprechend hängt die Gewichtung in einer Ausführung von der Lokalisierungsunsicherheit des Roboters, insbesondere für den bzw. an dem angefahrenen (der) Knoten ab und ist insofern variabel.

Dem liegen in einer Ausführung die folgenden Ideen zugrunde:
Beim Abfahren einer Route kann eine Lokalisierungsunsicherheit des Roboters zunehmen, insbesondere aufgrund statistischer Phänomene, Sensorungenauigkeiten oder dergleichen.

Durch das Abfahren von Schleifen-Routen bzw. das erneute Abfahren wenigstens eines Weges, nachdem dieser Weg und wenigstens ein weiterer Weg bereits wenigstens einmal abgefahren worden sind, kann diese Lokalisierungsunsicherheit reduziert werden, da der Roboter sozusagen auf (nun) bekanntem Terrain unterwegs ist bzw. die mehrfach abgefahrenen Wege abgleichen kann. Dabei wird in einer Ausführung der triviale Fall eines unmittelbar aufeinanderfolgenden gegensinnigen Durchfahrens eines Weges außer Acht gelassen, da diese die Lokalisierungsunsicherheit nur geringfügig verbessert.

In einer Ausführung wird, insbesondere für den bzw. an dem angefahrenen Knoten, die (aktuelle) Lokalisierungsunsicherheit des Roboters ermittelt. In einer Ausführung werden dann, in einer Weiterbildung nur bei Überschreiten eines Lokalisierungsunsicherheitsschwellwertes, eine oder mehrere Ersatz-Routen geplant, die jeweils (wenigstens) eine solche Schleifen-Route aufweisen und somit die Lokalisierungsunsicherheit reduzieren.

Durch das Gütekriterium wird der Aufwand für diese Ersatz-Route(n) mit dem Aufwand für die (bisher geplante) Ausgangs-Route verglichen und dabei die (ermittelte) Lokalisierungsunsicherheit des Roboters berücksichtigt: weist der Roboter eine niedrige(re) Lokalisierungsunsicherheit auf oder enthält die Ausgangs-Route ohnehin eine (naheliegende) Schleifen-Route, lohnt sich die Ersatz-Route sozusagen nicht und der Roboter wechselt nicht.

Weist der Roboter hingegen eine größere bzw. große Lokalisierungsunsicherheit auf und enthält die Ausgangs-Route keine (ausreichend naheliegende) Schleifen-Route, so reduziert sich der Wert der Gütefunktion der Ersatz-Route aufgrund der niedrige(ren) Gewichtung ihres zweiten Aufwands für ihre Rest-Route, so dass der Roboter gezielt zu der (entsprechenden) Ersatz-Route wechselt.

Dadurch kann in einer Ausführung zugleich die Genauigkeit und Geschwindigkeit optimiert werden.

In einer Ausführung werden, insbesondere an dem angefahrenen (der) Knoten und/oder beim Abfahren des Weges zu diesem Knoten, eine oder mehrere Posen des Roboters in seiner Umgebung bestimmt, in einer Ausführung mithilfe eines oder mehrerer roboterfester und/oder eines oder mehrerer umgebungsfester Sensoren.

Eine Pose umfasst dabei in einer Ausführung eine ein-, zwei- oder dreidimensionale Position und/oder eine ein-, zwei- oder dreidimensionale Orientierung des Roboters, in einer bevorzugten Ausführung eine zweidimensionale Position des Roboters in einer Ebene und eine eindimensionale Orientierung um eine Normale zu dieser Ebene.

In einer Weiterbildung wird auf Basis dieser Pose(n) eine Karte der Umgebung erstellt, wobei ein Erstellen in einer Ausführung ein Aktualisieren einer vorhandenen Karte umfassen, insbesondere sein kann.

Wie bereits erläutert, kann die vorliegende Erfindung mit besonderem Vorteil beim SLAM verwendet werden, insbesondere, um a priori Kenntnisse der Umgebung zu nutzen und dabei zugleich Genauigkeit und Geschwindigkeit zu optimieren.

In einer Ausführung hängt der Aufwand einer Route von ihrer Länge und/oder der zu( ihre)m Abfahren mit dem Roboter (als) erforderlich( prognostizierten Zeit und/oder Energie ab. In einer Weiterbildung wird der Aufwand einer Route auf Basis ihrer Länge und/oder der zu( ihre)m Abfahren mit dem Roboter (als) erforderlich( prognostizierten Zeit und/oder Energie ermittelt.

Hierdurch können in einer Ausführung vorteilhaft kürzeste, schnellste oder energieoptimale Routen abgefahren oder diese Kriterien auch miteinander und/oder mit anderen Kriterien berücksichtigt bzw. optimiert werden.

In einer Ausführung hängt die Lokalisierungsunsicherheit des Roboters (für einen bzw. an einem (der) Knoten) von einer Länge einer bisher (bzw. bis zu diesem Konten) abgefahrenen Route, einer Anzahl dabei (bereits) durchfahrener Schleifen-Routen und/oder einer Bestimmung einer oder mehrerer Posen des Roboters in seiner Umgebung ab. In einer Weiterbildung wird die Lokalisierungsunsicherheit auf Basis einer Länge einer bisher (bzw. bis zu dem angefahrenen Konten) abgefahrenen Route, einer Anzahl dabei durchfahrener Schleifen-Routen und/oder einer Bestimmung einer oder mehrerer Posen des Roboters in seiner Umgebung ermittelt.

Dabei wächst in einer Ausführung die Lokalisierungsunsicherheit mit wachsender Länge der bisher (bzw. bis zu dem Knoten) abgefahrenen Route und/oder sinkt mit wachsender Anzahl dabei durchfahrener Schleifen-Routen bzw. wird derart ermittelt. Dem liegt in einer Ausführung die Idee zugrunde, dass sich mit zunehmender Routenlänge statistische Effekte aufsummieren, andererseits, wie vorstehend erläutert, ihr Einfluss durch Schleifen-Routen reduziert werden kann.

In einer Ausführung hängt die Lokalisierungsunsicherheit des Roboters von einer Kovarianz-Matrix seiner Pose, insbesondere deren (Haupt)Diagonalenbetrag oder -summe ab, in einer Ausführung proportional bzw. linear.

Dadurch kann in einer Ausführung die Lokalisierungsunsicherheit des Roboters vorteilhaft quantifiziert bzw. abgeschätzt werden.

In einer Ausführung werden die Ausgangs-Route und/oder die Ersatz-Route(n) jeweils mit einem Lösungsverfahren für das sogenannte "Briefträgerproblem" ("Chinese Postman Problem" CPP) ermittelt, insbesondere mit einem Lösungsverfahren für das offene und/oder selektive Briefträgerproblem" ("Open/Rural Chinese Postman Problem"). Dabei kann insbesondere ein Rest einer, insbesondere vorab, ermittelten bzw. initial vorgegebenen Ausgangs-Route ab dem angefahrenen (der) Knoten als Ausgangs-Route verwendet und solcherart im Sinne der vorliegenden Erfindung ermittelt werden.

Nach einer Ausführung der vorliegenden Erfindung ist ein System, insbesondere hard- und/oder software-, insbesondere programmtechnisch, zur Durchführung eines hier beschriebenen Verfahrens eingerichtet und/oder weist auf:
Mittel zum Kommandieren eines Wechsels des Roboters von einer Ausgangs-Route, die alle noch nicht abgefahrenen Wege enthält, zu einer hiervon verschiedenen Ersatz-Route, die eine Schleifen-Route, welche wenigstens einen Weg nach Durchfahren dieses Weges und wenigstens eines weiteren Weges erneut durchfährt, und eine daran anschließende Rest-Route aufweist, die alle dann noch nicht abgefahrenen Wege enthält, falls ein Wert einer Gütefunktion für die Ersatz-Route kleiner als ein Wert dieser Gütefunktion für die Ausgangs Route ist,
wobei die Gütefunktion von einem ersten Aufwand, einem zweiten Aufwand und einer variablen Gewichtung des ersten und zweiten Wertes zueinander abhängt;
wobei der erste Aufwand der kleinere von einem minimalen Aufwand für eine Schleifen-Route, welche wenigstens einen Weg nach Durchfahren dieses Weges und wenigstens eines weiteren Weges erneut durchfährt, und einem minimalen Aufwand für eine Ziel-Route ist, die alle noch nicht abgefahrenen Wege enthält;
der zweite Aufwand ein minimaler Aufwand für eine Rest-Route ist, die alle nach dieser Schleifen-Route noch nicht abgefahrenen Wege enthält; und die variable Gewichtung den zweiten Aufwand für eine erste Lokalisierungsunsicherheit des Roboters niedriger gewichtet als für eine kleinere zweite Lokalisierungsunsicherheit des Roboters, insbesondere für eine minimale Lokalisierungsunsicherheit des Roboters maximal, insbesondere gleich dem ersten Aufwand, gewichtet und/oder für eine maximale Lokalisierungsunsicherheit des Roboters minimal gewichtet, insbesondere ausblendet.

In einer Ausführung weist das Verfahren bzw. System bzw. sein(e) Mittel auf:
(Mittel zum) Ermitteln der Ausgangs-Route und/oder Ersatz-Route(n), insbesondere deren Schleifen- und/oder Rest-Route(n);
(Mittel zum) Ermitteln der Gütefunktion, insbesondere des ersten Aufwands, des zweiten Aufwands und/oder der variablen Gewichtung, insbesondere der Lokalisierungsunsicherheit des Roboters;
Mittel zum Kommandieren eines Wechsels des Roboters von der Ausgangs-Route zu derjenigen von mehreren Ersatz Routen, für die der Wert der Gütefunktion am kleinsten ist;
Mittel zum Bestimmen wenigstens einer Pose des Roboters in seiner Umgebung; und/oder
Mittel zum Erstellen einer Karte der Umgebung auf Basis dieser Pose.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU), Graphikkarte (GPU) oder dergleichen, und/oder ein oder mehrere Programme oder Programmmodule aufweisen. Die Verarbeitungseinheit kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die Verarbeitungseinheit die Schritte solcher Verfahren ausführen kann und damit insbesondere mit dem Roboter die vorgegebene Anordnung abfahren bzw. den Roboter (hierzu) betreiben bzw. steuern kann. Ein Computerprogrammprodukt kann in einer Ausführung ein, insbesondere nichtflüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das System bzw. sein(e) Mittel.

In einer Ausführung weist das System den Roboter auf.

Weitere Vorteile und Merkmale ergeben sich aus den Unteransprüchen und den Ausführungsbeispielen. Hierzu zeigt, teilweise schematisiert:
- Fig. 1:: einen mobilen Roboter beim Abfahren einer vorgegebenen Anordnung von Wegen nach einer Ausführung der vorliegenden Erfindung; und
- Fig. 2:: ein Verfahren zum Abfahren der vorgegebenen Anordnung von Wegen mit dem mobilen Roboter nach einer Ausführung der vorliegenden Erfindung.

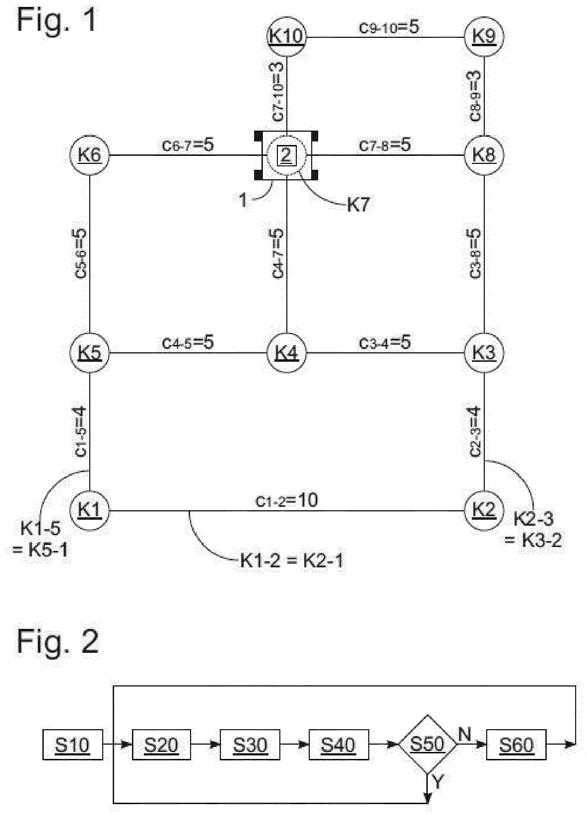

Fig. 1 zeigt eine vorgegebene Anordnung von Wegen, die in Knoten K1 - K10 miteinander verbunden sind, sowie einen autonomen mobilen Roboter 1 mit einer Steuerung 2.

Durch Abfahren aller Wege der vorgegebenen Anordnung können insbesondere ein Explorationspfad für eine simultane Posenbestimmung und Kartenerstellung mit dem Roboter 1 vorgegeben und dabei a priori Umweltinformationen genutzt bzw. berücksichtigt werden.

Für die Wege sind jeweils Kosten c vorgegeben, für die in Fig. 1 exemplarisch Werte angegeben sind, beispielsweise Kosten von 10 Einheiten für den Weg zwischen den Knoten K1 und K2 (c₁₋₂=10). Diese Kosten können beispielsweise von der Länge des Weges, der zu seinem Abfahren vom Roboter 1 benötigten Zeit oder dergleichen abhängen, diese insbesondere angeben bzw. sein.

In einem ersten Schritt S10 (vgl. Fig. 2) wurde mittels eines CPP-Lösungsverfahrens eine (erste) Ausgangs-Route ermittelt, die, beginnen an Knoten K1, alle Wege wenigstens einmal enthält und dabei einen (Gesamt)Aufwand, der gleich der Summe aller Kosten cᵢ₋ⱼ aller dabei abgefahrenen Wege ist, minimiert.

Im Ausführungsbeispiel ergab sich dabei die (erste bzw. initiale) Ausgangs-Route K1 → K2 → K3 → K4 → K5 → K4 → K7 → K10 → K9 → K8 → K3 → K8 → K7 → K6 → K5 → K1.

Roboter 1 hat beim Abfahren dieser Ausgangs-Route K1 aktuell Knoten K7 angefahren. Für diesen ermittelt die Steuerung 2 in einem Schritt S20 die aktuelle Lokalisierungsunsicherheit des Roboters, beispielsweise in Form des auf den Bereich [0; 1] normierten Betrags bzw. der Summe K der Hauptdiagonalen der Kovarianz-Matrix der Pose des Roboters 1 in seiner Umgebung.

Übersteigt dieser Wert, wie im Ausführungsbeispiel für den aktuellen Knoten K7 (erstmals) einen vorgegebenen Schwellwert, da beispielsweise aufgrund der Weglänge bis zu diesem Knoten ohne eine Schleifen-Route die Lokalisierungsunsicherheit zu groß geworden ist, ermittelt die Steuerung 2 in einem Schritt S30 eine (aktuelle) Ausgangs-Route, die diesen Knoten mit dem Zielknoten K1 verbindet und alle bisher noch nicht abgefahrenen Wege enthält, im Ausführungsbeispiel verwendet sie den Rest der o.g. (ersten) Ausgangs-Route (K7 → K10 → K9 → K8 → K3 → K8 → K7 → K6 → K5 → K1).

Es ist ersichtlich, dass hierbei kein Weg nach Durchfahren dieses Weges und wenigstens eines weiteren Weges erneut durchfahren wird, die aktuelle Ausgangs-Route also keine Schleifen-Route aufweist.

Die Steuerung 2 ermittelt zusätzlich in Schritt S30 mögliche Ersatz-Routen, die jeweils wenigstens einen Weg nach Durchfahren dieses Weges und wenigstens eines weiteren Weges erneut durchfahren.

Dazu blendet sie die drei zuletzt abgefahrenen Wege K3 - K4, K4 - K5 und K4 - K7 aus und stellt für die bereits angefahrenen Knoten K3 und K5 fest, dass diese auch dann bzw. bei ausgeblendeten Wegen K3 - K4, K4 - K5 und K4 - K7 von der aktuellen Knoten K7 aus angefahren werden können, während dies für K4 nicht der Fall ist (auf diese Weise wird ein triviales Zurückfahren K7 → K4 vermieden).

Für diese Knoten K3 und K5 wird - mit nun wieder eingeblendeten Wege K3 - K4, K4 - K5 und K4 - K7 - in Schritt S30 mittels eines offenen und/oder selektiven CPP-Lösungsverfahrens ("Open Rural Chinese Postman Problem") jeweils eine Schleifen-Route, welche wenigstens einen Weg nach Durchfahren dieses Weges und wenigstens eines weiteren Weges erneut durchfährt, und eine daran anschließende Rest-Route ermittelt, die alle dann noch nicht abgefahrenen Wege enthält und zu dem Zielknoten K1 zurückführt.

Für die aktuelle Ausgangs-Route und Ersatz-Routen, die sich jeweils aus einer der Schleifen-Routen und der daran anschließenden Rest-Route zusammensetzen, wird in einem Schritt S40 jeweils der Wert einer Gütefunktion G ermittelt.

Dazu wird in Schritt S40 jeweils ein erster Aufwand als kleinerer von einem minimalen Aufwand für eine Schleifen-Route, welche wenigstens einen Weg nach Durchfahren dieses Weges und wenigstens eines weiteren Weges erneut durchfährt, und einem minimalen Aufwand für eine Ziel-Route ist, die alle noch nicht abgefahrenen Wege enthält, sowie ein zweiter Aufwand ermittelt, der ein minimaler Aufwand für eine Rest-Route ist, die alle nach dieser Schleifen-Route noch nicht abgefahrenen Wege enthält:
aktuelle Ausgangs-Route:

| | |
|---|---|
| K7 → K10 → K9 → K8 → K3 → K8 → K7 → K6 → K5 → K1 | |
| erster Aufwand C_{1,A} (Ziel-Route) | = c₇₋₁₀ + c₁₀₋₉ + c₉₋₈ + c₈₋₃ + c₃₋₈ + c₈₋₇ +c₇₋₆ +c₆₋₅ +c₅₋₁ |
| | = 3 + 5 + 3 + 5 + 5 + 5 + 5 + 5 + 4 |
| | = 40 |
| zweiter Aufwand C_{2,A} | = 0 |

Ersatz-Route mit K5 bzw. Weg 4 - 5:

| | |
|---|---|
| Schleifen-Route: | K7 → K6 → K5 → K4 |
| erster Aufwand C_{1,E1} | = c₇₋₆ + c₆₋₅ + c₅₋₄ |
| | = 5 + 5 + 5 |
| | = 15 |

Rest-Route:

| | |
|---|---|
| K4 → K7 → K10 → K9 → K8 → K3 → K8 → K7 → K4 → K5 → K1 | |
| zweiter Aufwand C_{2,E2} | = c₄₋₇ + c₇₋₁₀ + c₁₀₋₉ + c₉₋₈ + |
| | + c₈₋₃ + c₃₋₈ + c₈₋₇ + c₇₋₄ + c₄₋₅ + c₅₋₁ |
| | = 5 + 3 + 5 + 3 + 5 + 5 + 5 + 5 + 5 + 4 |
| | = 45 |

Ersatz-Route mit K3 bzw. Weg 3 - 4:

| | |
|---|---|
| Schleifen-Route: | K7 → K8 → K3 → K4 |
| erster Aufwand C_{1,E2} | = c₇₋₈ + c₈₋₃ + c₃₋₄ |
| | = 5 + 5 + 5 |
| | = 15 |

Rest-Route:

| | |
|---|---|
| K4 → K7 → K10 → K9 → K8 → K7 → K6 → K5 → K1 | |
| zweiter Aufwand C_{2,E2} | = c₄₋₇ + c₇₋₁₀ + c₁₀₋₉ + c₉₋₈ + |
| | + c₈₋₇ + c₇₋₆ + c₆₋₅ + c₅₋₁ |
| | = 5 + 3 + 5 + 3 + 5 + 5 + 5 + 4 |
| | = 35 |

Dann wird in Schritt S40 für jede der Routen der Wert des Gütekriteriums C_{E} = C₁ + K·C₂ ermittelt:

| | |
|---|---|
| aktuelle Ausgangs-Route: | C_{E,A} = C_{1,A} + K·C_{2,A} |
| Ersatz-Route mit K5 bzw. Weg 5 - 4: | C_{E,E1} = C_{1, E1} + K·C_{2, E1} |
| Ersatz-Route mit K3 bzw. Weg 3 - 4: | C_{E,E2} = C_{1, E2} + K·C_{2, E2} |

Ist beispielsweise der Roboter 1 am Knoten 7 (noch bzw. wieder) perfekt lokalisiert, ist seine Lokalisierungsunsicherheit bzw. die variable Gewichtung des zweiten Aufwands C₂ gleich 1:

| | |
|---|---|
| aktuelle Ausgangs-Route: | C_{E,A} = 40 + 1·0 |
| | = 40 |
| Ersatz-Route mit K5 bzw. Weg 5 - 4: | C_{E,E1} = 15 + 1·45 |
| | = 60 |
| Ersatz-Route mit K3 bzw. Weg 3 - 4: | C_{E,E2} = 15 + 1·35 |
| | = 50 |

Da der Wert der Gütefunktion für die Ausgangs-Route kleiner als der Wert für die Ersatz-Routen ist (S50: "N"), wechselt der Roboter 1 nicht, sondern fährt die aktuelle Ausgangs-Route weiter ab.

Ist umgekehrt der Roboter 1 am Knoten 7 maximal unsicher lokalisiert, ist seine Lokalisierungsunsicherheit bzw. die variable Gewichtung des zweiten Aufwands C₂ gleich 0:

| | |
|---|---|
| aktuelle Ausgangs-Route: | C_{E,A} = 40 + 0·0 |
| | = 40 |
| Ersatz-Route mit K5 bzw. Weg 5 - 4: | C_{E,E1} = 15 + 0·45 |
| | = 15 |
| Ersatz-Route mit K3 bzw. Weg 3 - 4: | C_{E,E2} = 15 + 0·35 |
| | = 15 |

Da nun der Aufwand für die Rest-Route nicht mehr ins Gewicht fällt und dadurch der Wert der Gütefunktion für die Ersatz-Routen kleiner als der Wert für die Ausgangs-Route ist (S50: "Y"), wechselt der Roboter 1 nun wunschgemäß zur (günstigeren) Ersatz-Route (S60), wobei in diesem Extremfall mit K = 0 beide Ersatzrouten gleich gut erscheinen, bei geringfügiger Berücksichtigung der Rest-Route die Ersatz-Route mit K3 bzw. Weg 3 - 4 günstiger ist und ausgewählt wird.

### Bezugszeichenliste

- 1: mobiler Roboter
- 2: Steuerung
- K1,...,K10: Knoten
- K1 - K2, K2 - K3,... K1 - K5,: Weg

## Patentansprüche

1. Verfahren zum Abfahren einer vorgegebenen Anordnung von Wegen (K1 - K2, K2 - K3, K1 - K5), die in Knoten (K1,...,K10) miteinander verbunden sind, mit einem mobilen, insbesondere autonomen, Roboter (1), wobei der Roboter von einer Ausgangs-Route,
die alle noch nicht abgefahrenen Wege enthält,
zu einer hiervon verschiedenen Ersatz-Route wechselt (S60),
die eine Schleifen-Route,
welche wenigstens einen Weg nach Durchfahren dieses Weges und
wenigstens eines weiteren Weges erneut durchfährt, und
eine daran anschließende Rest-Route aufweist,
die alle dann noch nicht abgefahrenen Wege enthält,
falls ein Wert einer Gütefunktion für die Ersatz-Route kleiner als ein Wert dieser Gütefunktion für die Ausgangs-Route ist,
**dadurch gekennzeichnet, dass**
die Gütefunktion von einem ersten Aufwand, einem zweiten Aufwand und einer variablen Gewichtung des ersten und zweiten Wertes zueinander abhängt;
wobei der erste Aufwand der kleinere von
einem minimalen Aufwand für eine Schleifen-Route,
welche wenigstens einen Weg nach Durchfahren dieses Weges und
wenigstens eines weiteren Weges erneut durchfährt, und
einem minimalen Aufwand für eine Ziel-Route, die alle noch nicht abgefahrenen Wege enthält; und
der zweite Aufwand ein minimaler Aufwand für eine Rest-Route ist,
die alle nach dieser Schleifen-Route noch nicht abgefahrenen Wege enthält; und
die variable Gewichtung den zweiten Aufwand
für eine erste Lokalisierungsunsicherheit des Roboters niedriger gewichtet als für eine kleinere zweite Lokalisierungsunsicherheit des Roboters,
insbesondere für eine minimale Lokalisierungsunsicherheit des Roboters maximal, insbesondere gleich dem ersten Aufwand, gewichtet und/oder für eine maximale Lokalisierungsunsicherheit des Roboters minimal gewichtet, insbesondere ausblendet.

2. Verfahren nach Anspruch 1, **dadurch gekennzeichnet, dass** der Roboter von der Ausgangs-Route zu derjenigen von mehreren Ersatz-Routen wechselt, für die der Wert der Gütefunktion am kleinsten ist.

3. Verfahren nach einem der vorhergehenden Ansprüche, **dadurch gekennzeichnet, dass** wenigstens eine Pose des Roboters in seiner Umgebung bestimmt wird.

4. Verfahren nach dem vorhergehenden Anspruch, **dadurch gekennzeichnet, dass** auf Basis dieser Pose eine Karte der Umgebung erstellt wird.

5. Verfahren nach einem der vorhergehenden Ansprüche, **dadurch gekennzeichnet, dass** der Aufwand einer Route von ihrer Länge und/oder der zum Abfahren mit dem Roboter erforderlichen Zeit und/oder Energie abhängt.

6. Verfahren nach einem der vorhergehenden Ansprüche, **dadurch gekennzeichnet, dass** die Lokalisierungsunsicherheit des Roboters von einer Länge einer bisher abgefahrenen Route, einer Anzahl dabei durchfahrener Schleifen-Routen und/oder einer Bestimmung wenigstens einer Pose des Roboters in seiner Umgebung abhängt.

7. System zum Abfahren einer vorgegebenen Anordnung von Wegen, die in Knoten miteinander verbunden sind, mit einem mobilen, insbesondere autonomen, Roboter (1), wobei das System zur Durchführung eines Verfahrens nach einem der vorhergehenden Ansprüche eingerichtet ist und/oder aufweist:
Mittel (2) zum Kommandieren eines Wechsels des Roboters von einer Ausgangs-Route, die alle noch nicht abgefahrenen Wege enthält,
zu einer hiervon verschiedenen Ersatz-Route,
die eine Schleifen-Route, welche wenigstens einen Weg nach Durchfahren dieses Weges und wenigstens eines weiteren Weges erneut durchfährt, und
eine daran anschließende Rest-Route aufweist, die alle dann noch nicht abgefahrenen Wege enthält,
falls ein Wert einer Gütefunktion für die Ersatz-Route kleiner als ein Wert dieser Gütefunktion für die Ausgangs-Route ist,
**dadurch gekennzeichnet, dass**
die Gütefunktion von einem ersten Aufwand, einem zweiten Aufwand und einer variablen Gewichtung des ersten und zweiten Wertes zueinander abhängt;
wobei der erste Aufwand der kleinere von
einem minimalen Aufwand für eine Schleifen-Route, welche wenigstens einen Weg nach Durchfahren dieses Weges und wenigstens eines weiteren Weges erneut durchfährt, und
einem minimalen Aufwand für eine Ziel-Route, die alle noch nicht abgefahrenen Wege enthält; und
der zweite Aufwand ein minimaler Aufwand für eine Rest-Route ist, die alle nach dieser Schleifen-Route noch nicht abgefahrenen Wege enthält; und
die variable Gewichtung den zweiten Aufwand für eine erste Lokalisierungsunsicherheit des Roboters niedriger gewichtet als für eine kleinere zweite Lokalisierungsunsicherheit des Roboters, insbesondere für eine minimale Lokalisierungsunsicherheit des Roboters maximal, insbesondere gleich dem ersten Aufwand, gewichtet und/oder für eine maximale Lokalisierungsunsicherheit des Roboters minimal gewichtet, insbesondere ausblendet.

8. Computerprogrammprodukt mit einem Programmcode, der auf einem von einem Computer lesbaren Medium gespeichert ist, zur Durchführung eines Verfahrens nach einem der vorhergehenden Ansprüche.

## Claims

1. Method for travelling along a predefined arrangement of paths (K1 - K2, K2 - K3, K1 - K5), which are connected to one another in nodes (K1,...,K10), with a mobile, in particular autonomous, robot (1), wherein the robot
changes (S60)
from an initial route,
which contains all paths not yet travelled along,
to a, different, substitute route,
which comprises a loop route,
which takes at least one path again after taking this path and at least one further path, and
an adjoining remaining route,
which contains all paths then not yet travelled along, if a value of a quality function for the substitute route is less than a value of this quality function for the initial route,
**characterized in that**
the quality function is dependent on a first effort, a second effort and a variable weighting of the first and second values in relation to one another;
wherein the first effort is the lesser of a minimum effort for a loop route,
which takes at least one path again after taking this path and at least one further path, and
a minimum effort for a target route, which contains all paths not yet travelled along; and
the second effort is a minimum effort for a remaining route,
which contains all paths not yet travelled along after this loop route;
and
the variable weighting provides the second effort with a lower weighting for a first localization uncertainty of the robot than for a lesser second localization uncertainty of the robot,
in particular provides it with the maximum weighting, in particular the same as the first effort, for a minimum localization uncertainty of the robot and/or provides it with the minimum weighting, in particular hides it, for a maximum localization uncertainty of the robot.

2. Method according to Claim 1, **characterized in that** the robot changes from the initial route to that one of multiple substitute routes for which the value of the quality function is the least.

3. Method according to either of the preceding claims, **characterized in that** at least one pose of the robot in its surroundings is determined.

4. Method according to the preceding claim, **characterized in that** this pose is taken as a basis for creating a map of the surroundings.

5. Method according to one of the preceding claims, **characterized in that** the effort of a route is dependent on its length and/or the time and/or energy required for travelling along it with the robot.

6. Method according to one of the preceding claims, **characterized in that** the localization uncertainty of the robot is dependent on a length of a route travelled along hitherto, a number of loop routes passed through in so doing and/or a determination of at least one pose of the robot in its surroundings.

7. System for travelling along a predefined arrangement of paths, which are connected to one another in nodes, with a mobile, in particular autonomous, robot (1), wherein the system is configured to perform a method according to one of the preceding claims and/or comprises:
means (2) for commanding the robot to change from an initial route, which contains all paths not yet travelled along,
to a, different, substitute route,
which comprises a loop route, which takes at least one path again after taking this path and at least one further path, and
an adjoining remaining route, which contains all paths then not yet travelled along,
if a value of a quality function for the substitute route is less than a value of this quality function for the initial route,
**characterized in that**
the quality function is dependent on a first effort, a second effort and a variable weighting of the first and second values in relation to one another;
wherein the first effort is the lesser of a minimum effort for a loop route, which takes at least one path again after taking this path and at least one further path, and
a minimum effort for a target route, which contains all paths not yet travelled along; and
the second effort is a minimum effort for a remaining route, which contains all paths not yet travelled along after this loop route; and
the variable weighting provides the second effort with a lower weighting for a first localization uncertainty of the robot than for a lesser second localization uncertainty of the robot, in particular provides it with the maximum weighting, in particular the same as the first effort, for a minimum localization uncertainty of the robot and/or provides it with the minimum weighting, in particular hides it, for a maximum localization uncertainty of the robot.

8. Computer program product containing a program code, which is stored on a medium that can be read by a computer, for performing a method according to one of the preceding claims.

## Revendications

1. Procédé permettant de parcourir un agencement prédéfini de chemins (K1 à K2, K2 à K3, K1 à K5) qui sont reliés les uns aux autres dans des noeuds (K1, ..., K10) avec un robot mobile (1), en particulier autonome, dans lequel le robot passe (S60)
d'un itinéraire de départ
qui comporte tous les chemins pas encore parcourus
à un itinéraire de remplacement, différent de celui-ci,
qui présente un itinéraire en boucle
qui parcourt à nouveau au moins un chemin après avoir parcouru ce chemin et au moins un autre chemin, et
un itinéraire restant consécutif à celui-ci
qui comporte tous les chemins pas encore parcourus à ce moment-là,
si une valeur d'une fonction de qualité pour l'itinéraire de remplacement est inférieure à une valeur de cette fonction de qualité pour l'itinéraire de départ,
**caractérisé en ce que** la fonction de qualité dépend d'une première dépense, d'une deuxième dépense et d'une pondération variable de la première et de la deuxième valeur l'une par rapport à l'autre ;
dans lequel la première dépense est la plus petite parmi
une dépense minimale pour un itinéraire en boucle
qui parcourt à nouveau au moins un chemin après avoir parcouru ce chemin et au moins un autre chemin, et
une dépense minimale pour un itinéraire cible qui comporte tous les chemins pas encore parcourus ; et
la deuxième dépense est une dépense minimale pour un itinéraire restant
qui comporte tous les chemins pas encore parcourus après cet itinéraire en boucle ; et
la pondération variable pondère moins fortement la deuxième dépense
pour une première incertitude de localisation du robot que pour une deuxième incertitude de localisation, inférieure, du robot, en particulier la pondère de manière maximale pour une incertitude de localisation minimale du robot, en particulier la pondère de manière identique à la première dépense, et/ou la pondère de manière minimale, en particulier la masque, pour une incertitude de localisation maximale du robot.

2. Procédé selon la revendication 1, **caractérisé en ce que** le robot passe de l'itinéraire de départ à l'itinéraire parmi plusieurs itinéraires de remplacement pour lequel la valeur de la fonction de qualité est la plus faible.

3. Procédé selon l'une quelconque des revendications précédentes, **caractérisé en ce qu'**au moins une posture du robot dans son environnement est déterminée.

4. Procédé selon l'une quelconque des revendications précédentes, **caractérisé en ce qu'**une carte de l'environnement est créée sur la base de cette posture.

5. Procédé selon l'une quelconque des revendications précédentes, **caractérisé en ce que** la dépense d'un itinéraire dépend de sa longueur et/ou du temps et/ou de l'énergie nécessaires pour le parcourir avec le robot.

6. Procédé selon l'une quelconque des revendications précédentes, **caractérisé en ce que** l'incertitude de localisation du robot dépend d'une longueur d'un itinéraire déjà parcouru, d'un nombre d'itinéraires en boucle parcourus à cette occasion et/ou d'une détermination d'au moins une posture du robot dans son environnement.

7. Système permettant de parcourir un agencement prédéfini de chemins qui sont reliés les uns aux autres dans des noeuds avec un robot mobile (1), en particulier autonome, dans lequel le système est conçu pour exécuter un procédé selon l'une quelconque des revendications précédentes, et/ou présente :
des moyens (2) pour ordonner un passage du robot d'un itinéraire de départ qui comporte tous les chemins pas encore parcourus à un itinéraire de remplacement différent de celui-ci qui présente un itinéraire en boucle qui parcourt à nouveau au moins un chemin après avoir parcouru ce chemin et au moins un autre chemin, et un itinéraire restant consécutif à celui-ci qui comporte tous les chemins pas encore parcourus si une valeur d'une fonction de qualité pour l'itinéraire de remplacement est inférieure à une valeur de cette fonction de qualité pour l'itinéraire de départ,
**caractérisé en ce que** la fonction de qualité dépend d'une première dépense, d'une deuxième dépense et d'une pondération variable de la première et de la deuxième valeur l'une par rapport à l'autre ;
dans lequel la première dépense est la plus petite parmi
une dépense minimale pour un itinéraire en boucle qui parcourt à nouveau au moins un chemin après avoir parcouru ce chemin et au moins un autre chemin, et
une dépense minimale pour un itinéraire cible qui comporte tous les chemins pas encore parcourus ; et
la deuxième dépense est une dépense minimale pour un itinéraire restant qui comporte tous les chemins pas encore parcourus après cet itinéraire en boucle ; et
la pondération variable pondère moins fortement la deuxième dépense pour une première incertitude de localisation du robot que pour une deuxième incertitude de localisation, inférieure, du robot, en particulier la pondère de manière maximale pour une incertitude de localisation minimale du robot, en particulier la pondère de manière identique à la première dépense, et/ou la pondère de manière minimale, en particulier la masque, pour une incertitude de localisation maximale du robot.

8. Produit de programme informatique, comprenant du code programme qui est stocké sur un support lisible par un ordinateur pour exécuter un procédé selon l'une quelconque des revendications précédentes.
